# EUROPEAN PATENT SPECIFICATION

(11) **EP 0 914 746 B1**
(45) Date of publication and mention of the grant of the patent: **04.06.2003**
(21) Application number: 98904322.9
(22) Date of filing: 05.03.1998
(51) Int. Cl.: H04N 7/26

(54) **IMAGE HANDLING SYSTEM AND METHOD**
BILDBEARBEITUNGSSYSTEM UND -VERFAHREN
SYSTEME ET PROCEDE DE TRAITEMENT D'IMAGES

(30) Priority: 02.04.1997 EP 97400762
(43) Date of publication of application: 12.05.1999
(73) Proprietor: Koninklijke Philips Electronics N.V., 5621 BA Eindhoven (NL)
(72) Inventor: VAN LERBERGHE, Steven, Jan, Willem, NL-5656 AA Eindhoven (NL)
(74) Representative: Deguelle, Wilhelmus Hendrikus Gerardus
(86) International application number: IB9800286
(87) International publication number: WO98044738

(56) References cited:
- US-A- 5 396 237

## Description

The invention relates to an image handling system according to the precharacterising part of Claim 1. The invention also relates to a method of operating such a system.

Such an image handling system and method is known from PCT patent application WO 95/14349.

Conventionally the pixel values of pixels of an image are transferred line of pixels after line of pixels from an image source like a tuner to an image receiver like a display device.

Resolution of the image receiver is a cost factor. For example, a low resolution display device which displays one output pixel for each block of pixels in the image is usually less expensive than a higher resolution display device which displays an output pixel for each pixel in the image. It is therefore desirable to introduce different versions of the image handling system, which differ from each other in the resolution used by the image receiver. However, in order to obtain the lower resolution the pixel values of the pixels from each block need to be compounded. In principle this could be done in the image source, but to simplify the exchange of different image receivers and to keep down development cost, it is desirable to keep the image source the same for each version of the image handling system. In this way only one image source needs to be developed for several image receivers and the development cost of the image receivers could be spread over different types of image sources.

However, when the pixel values are transferred for line of pixels after line of pixels one or more line memories are needed in the image receiver to store pixel values that are transferred between the pixel values of pixels of one block for later compounding. This causes extra cost, thereby defeating the purpose of using different image receivers.

What is needed is a method of allowing interchangeable use of image receivers with mutually different resolutions in the image handling system, without requiring a change in the way the pixel values are transferred and without requiring a memory in the image receiver for pixel values of pixels that do not belong to a block and that are transferred between the pixel values for that block.

WO 95/14349 teaches a system in which an image is compressed for transfer between the image source and the image receiver. The image source represents the image in a Quadtree structure, which subdivides the image into a matrix of two times two blocks, each block in turn being subdivided into a matrix of two times two smaller blocks and so on recursively. When the content of the image is such that there is less than a predetermined amount of variation in a block, the smaller blocks contained in that block are pruned from the representation of the image. The image source transfers image details only for those blocks that have not been pruned to the image receiver. In addition the image source transfers a quadtree code to indicate which blocks have been pruned. Information about the pixels is transferred block after block, all of the unpruned smaller blocks contained in each particular block in a matrix being transferred before transferring information about any other block in that matrix.

This publication is concerned with compression of images by eliminating transfer of whole blocks depending on the image content. It gives no suggestion to order the transfer of pixel values in this way if no elimination of blocks is attempted.

The image handling system according to the invention is characterized in that, independent of a content of the image, the image source transfers the pixel values of all pixels of each particular block consecutively without intervening transfer of pixel values of pixels from other blocks from the level to which the particular block belongs. Thus all of the pixel values of the image are transferred, irrespective of the content of the image, in a temporal order which groups the pixel values of pixels contained in a block consecutively, the pixel values of pixels from different blocks of the same level being transferred block after block. Thus blocks belonging to a matrix that is a subdivision of a block at a next higher level are also transferred consecutively without intervening pixels from other blocks of the next higher level.

The image receiver has a resolution which corresponds to any predetermined level of blocks. For each block of that predetermined level the pixel values arrive without intervening pixel values from other blocks of that predetermined level. Therefore no memory is needed for such intervening pixel values. A family of versions of the system is possible with image receivers having a resolution corresponding to any of the levels of blocks, also to individual pixels.

An embodiment of the image handling according to the invention is characterized in that the image receiver is arranged to retain the image at a coarser resolution than a resolution of individual pixels, the image receiver retaining only one respective output pixel for each particular block of a predetermined level, the image receiver deriving the one respective output pixel for the particular block from the transferred pixels of that particular block. In this case the invention is used to connect an image receiver with a coarser resolution than individual pixels.

Another embodiment of the image handling system according to the invention is characterized in that the image source is arranged to transfer the blocks from each respective matrix in a same sequence according to their spatial position in the matrix. This makes it possible to use the same type of address generation for assigning display coordinates at all levels of blocks.

These and other advantageous aspects of the invention will be further described using the following drawing in which
Figure 1 shows an image transfer system according to the invention.
Figure 2 shows a grouping of the pixels of an image into a number of levels of blocks.
Figure 3 shows a sequence of transferring pixel values according to the invention.
Figure 4 shows a further image transfer system according to the invention.

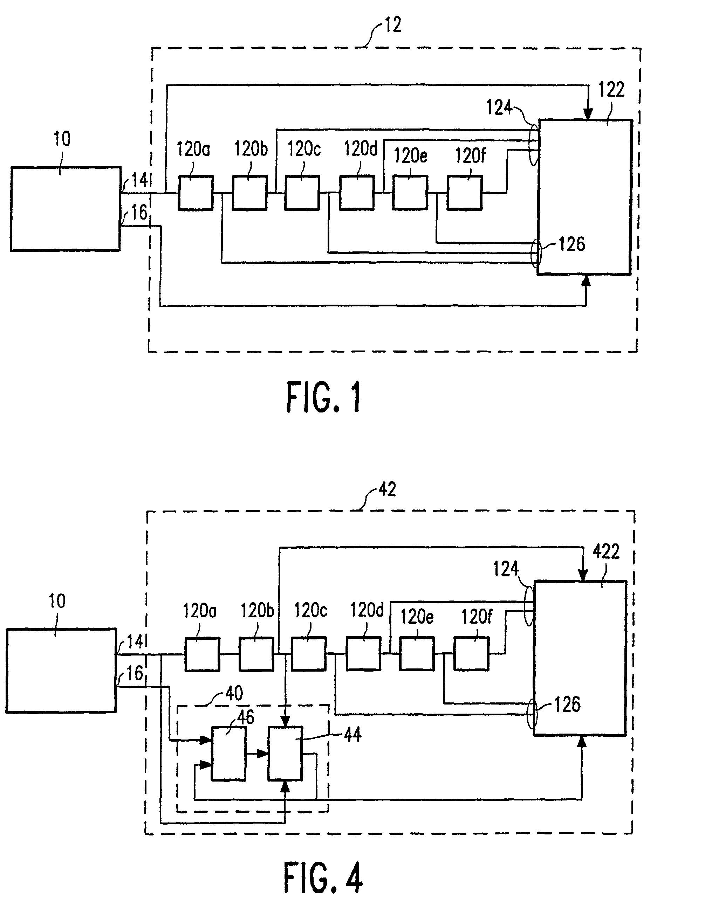

Figure 1 shows an image transfer system containing an image source 10 and an image receiver 12. The image source 10 has a clock output 14 and a data output 16. The image receiver contains a cascade of divide-by-two circuits 120a-f (the cascade containing six circuits 120a-f in asynchronous cascade by way of example). The input of the cascade is coupled to the clock output 14 of the image source 10. The image receiver 12 furthermore contains a display device 122 with an X-address input port 124, a Y-address input port 126, a data input port 128 and a clock input. The clock output 14 is coupled to the clock input of the display device 122. Outputs of successive divide by two circuits 120a-f in the cascade are connected alternately to the X-address port 124 and the Y-address port 126. The data output 16 of the image source 10 is connected to the data input port 128. By way of example a matrix of 8x8 pixels is shown symbolically on the display device 122.

In operation, the image source 10 transfers pixel values to the image receiver 12 via the data output 16, clocked by the clock output 14.

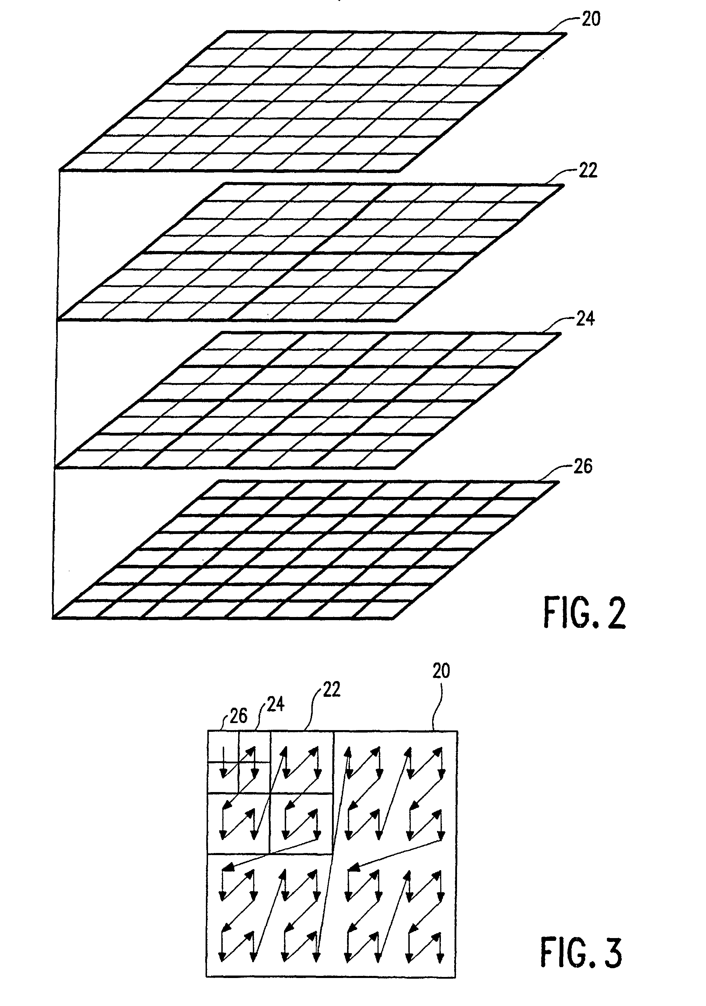

Figure 2 shows a grouping of the pixels of an image into a number of levels of blocks, to illustrate a sequence in which the image source 10 transfers pixel values to the image receiver 12. By way of example the image is shown to have 8x8 pixels. In a top level 20 of the grouping the image is subdivided into one block of 64 pixels, shown surrounded by thick lines. In a next lower level 22, the block of 64 pixels is divided in a matrix of 2x2 smaller blocks of 16 pixels also shown surrounded by thick lines. In a next lower level 24 the smaller blocks of 16 pixels are subdivided into a matrix of yet smaller blocks of 4 pixels also shown surrounded by thick lines. Finally in the lowest level 26 the yet smaller blocks of 4 pixels are subdivided into individual pixels.

Figure 3 shows a sequence of transferring pixel values according to the invention. In this sequence blocks of each level are transferred one after the other. At the level 22 of 2x2 blocks of 16 pixels, the pixel values of pixels in the upper left block of 16 pixels are transferred first, then the pixel values of the pixels in the lower left block of 16 pixels are transferred, then the pixel values of the pixels in the upper right block of 16 pixels and finally the pixel values of the pixels in the lower right block of 16 pixels. During the transfer of each block the smaller blocks of the next lower level are also transferred one after the other. For example, during the transfer of the upper left block of 16 pixels, the pixel values of the pixels in the upper left smaller block of 4 pixels of the lower level 24 are transferred first, then the pixel values of the pixels in the lower left block of 4 pixels within the upper left block of 16 pixels, then the pixel values of the pixels in the upper right block of 4 pixels within the upper left block of 16 pixels and finally the pixel values of the pixels in the lower right block of 4 pixels within the upper left block of 16 pixels.

Returning to figure 1, the image source 10 supplies the pixel values via data output 16 clocked with clock output 14 to the image receiver 12 in the sequence described in the context of figures 3 and 4. The clock is applied to the cascade of divide-by-two circuits 120a-f, the divide-by-two circuits responding to 1-0 transitions (of course instead of the asynchronous an synchronous cascade may also be used, where transitions of all divide-by-two circuits are collectively clocked). The cascade of divide-by-two circuits 120a-f counts clock pulses received the clock output 14 and derives from this an X-Y address of the pixel. By using the outputs of the divide-by-two circuits 120a-f alternately for the X-address and the Y-address, a sequence of addresses ((X,Y)== (000,000), (000,001), (001,000), (001,001), (000,010), (000,011), (001,010) etcetera) is generated that corresponds to the sequence in which the pixel values are transmitted. These addresses are used to signal to the display device 122 the X,Y coordinates of the pixel corresponding to the pixel value received from the data output 16 on the display surface of the display device 122. For every clock pulse on the clock output 14 a new pixel value and corresponding (X,Y) address is clocked in this way into the display device 122.

The image source 10 generates the sequence in which the pixel values are transferred for example using the same kind of divide-by-two cascade as the image receiver 122 for generating addresses of an image memory (not shown) or any other addressable pixel source. The precise implementation of generating the sequence is not essential. Of course, the specific link between the image source is also not essential. Instead of a data output and a clock output, one might use just a data-output and regenerate the clock from the data. The data may be transferred by transmission via any medium, such as wireless transmission, storage on magnetic tape etcetera or the image source and the image receiver may be part of a single apparatus, such as telephone handsets for image data communication which may be sold in different versions with display devices of different resolutions.

This sequence of transferring pixel values to the image receiver 12 does not have any particular advantage in the system of figure 1 by itself. The advantage only becomes apparent if the image receiver 12 is replaced by another image receiver which operates at a lower resolution than the image receiver of figure 1. In this case, the image source does not need to be adapted to the lower resolution. The advantage of using the invention will be made clear using figure 4.

Figure 4 shows a further image transfer system according to the invention. Except for the image receiver 12 this system is the same as that of figure 1. Elements equivalent to those of the image transfer system of Figure 1 have been indicated with the same reference numerals. The main difference with figure 4 is that the display device 422 has a resolution that is a factor 2 lower than that of the display device 122 of figure 1 in both the X and Y direction. The image source 10 supplies pixel values in the same sequence as in figure 1. The image source 10 is independent of the resolution actually used in the image receiver 12.

A difference with the system of figure 1 is further that the data from the data output 16 is passed through a summing circuit 40. By way of example this circuit contains an adder 46 with a first adder input coupled to the data output 16 of the image source 10 and an adder output coupled to a register 44. An output of the register 44 is coupled to a second adder input of the adder 46. The register 44 has a load input coupled to the clock output 14 of the image source 10 and a reset input coupled to the output of the second divide-by-two circuit 120b in the cascade of divide-by-two circuits 120a-f.

In operation the summing circuit each time sums the four pixel values of each four pixel block at the level 24 of 4x4 blocks of 4 pixels. Each time the clock output 14 signals that a pixel value has arrived via the data output 16, the sum of that pixel value and the previous content of the register 44 is latched into the register. After four clock pulses, when pixel values a complete block of four pixels has arrived, the content of the register 44 is reset to zero e.g. in response to a 1-0 edge at the output of the second divide-by-two circuit 120b in the cascade.

A difference with the system of figure 1 is furthermore that the outputs of the first and second divide-by-two circuits 120a,b at the input end of the cascade of divide-by two circuits 120a-f are not supplied to the X and Y address ports 124, 126, that the output of the second divide-by-two circuit 120b is used to clock the display device 122 (with a suitable delay to allow the cascade to settle) and that the output of the register 44 is coupled to the data input port 128 of the display device 422.

In operation, an output pixel value and an (X,Y) address is clocked into the display device 422 from the register 44 after reception and summing of four pixel values from a block of 4 pixels from the level 24 of 4x4 blocks (and before reset of the register 44, obviously). Thus a filtered lower resolution image is displayed on the display device 422. It will be noted that for this purpose no memory for complete lines of the image is needed in the image receiver 42.

The same result can be achieved for an image transfer system with a display device of even lower resolution merely by summing more pixel values and using a smaller address. Of course, instead of summing of the pixels in a block, other operations could be applied to these pixels, such as weighted summing or sampling of one of the pixel values to be used as output value. In the latter case, the invention ensures equal time spaces between successive samples, which allows the display device equal time to handle each pixel. The cascade shown for computing the X,Y addresses is shown for illustration of a convenient method of generating addresses only. If a cascade is used, then instead of the asynchronous cascade a synchronous (collectively clocked) divide-by-two cascade may be used, the output of the second divide-by two circuit being used to enable the clock in the case of a reduction of resolution by a factor of 2 in the x and y direction.

It will be apparent that the advantages of the invention can be achieved with any sequence of transferring blocks as a whole, not just with the upper-left, lower-left, upper-right, lower-right sequence shown in figure 3 by way of example, nor with does the sequence need to be the same for each level of blocks. Different sequences merely require different (usually more complicated) address generation, for example using a ROM to translate a pixel count into an X-Y address. Nor is the image receiver 12, 42 limited to direct driving of a display device 122, 422. The image receiver might for example write the pixel values into a memory (not shown) storing the image at the resolution appropriate to the image receiver 12, 42.

Moreover, it will be apparent that the size of the blocks used in the figures is merely for the purpose of illustration. A block does not always need to be square (e.g. one might use a lowest level of blocks of 2x3 pixels). Nor does the subdivision into smaller blocks of a next lower level of blocks always need to be in a 2x2 matrix (one might use e.g. a 2x3 matrix).

Moreover, it will be apparent that the size of the image used in the figures is merely for the purpose of illustration. In practice, a size of more than 8x8 pixels will usually be used, e.g. 256x256. Practical sizes include non-square sizes (with different X and Y ranges) and X and Y resolutions that are not a power of 2. For practical sizes the highest relevant level of blocks may be a matrix containing a substantial number of blocks (e.g. 96x64 of each 8x8 pixels). In this case the blocks at the highest relevant level may for example be transferred row by row (for example first 96 blocks from a row at the top of the image, then 96 from the next row). As long as all pixel values are transferred so that the blocks at this highest relevant level nor the blocks from matrices below this highest level are split, it is possible to use different image receivers for a range of resolutions (e.g. 96x64, 192x128, 384x256, 768x512) exchangeably. In this case, the cascade of divide-by-two circuits 120a-f may be followed by a cascade of an X address counter and a Y-address counter for determining the most significant part of the (X,Y) address.

## Claims

1. Image handling system comprising an image source and an image receiver linked to each other for transfer of pixel values, the image source grouping the image into levels of blocks of pixels, each particular level, except a top level, providing a subdivision of each block of pixels of a next higher level into a respective matrix of blocks of pixels of that particular level, the image source transferring information about the pixels to the image receiver on a block after block basis, **characterized in that**, independent of a content of the image, the image source transfers the pixel values of all pixels of each particular block consecutively without intervening transfer of pixel values of pixels from other blocks from the level to which the particular block belongs.

2. Image handling system according to Claim 1, **characterized in that** the image receiver is arranged to retain the image at a coarser resolution than a resolution of individual pixels, the image receiver retaining only one respective output pixel for each particular block of a predetermined level, the image receiver deriving the one respective output pixel for the particular block from the transferred pixels of that particular block.

3. Image handling system according to Claim 1, **characterized in that** the image source is arranged to transfer the blocks from each respective matrix in a same sequence according to their spatial position in the matrix.

4. Method of transferring pixel values between an image source and an image receiver, wherein the image is grouped into levels of blocks of pixels, each particular level, except a top level, providing a subdivision of each block of pixels of a next higher level into a respective matrix of blocks of pixels of that particular level, information about the pixels being transferred on a block after block basis, **characterized in that**, independent of a content of the image, the pixel values of all pixels of each particular block are transferred consecutively without intervening transfer of pixel values of pixels from other blocks from the level to which the particular block belongs.

5. Method according to Claim 4, **characterized in that** the blocks from each respective matrix are transferred in a same sequence according to their spatial position in the matrix.

## Patentansprüche

1. Bildverarbeitungssystem mit einer Bildquelle und einem Bildempfänger, die zum Übertragen von Pixelwerten miteinander gekoppelt sind, wobei die Bildquelle das Bild zu Pegeln von Pixelblöcken gruppiert, wobei jeder betreffende Pegel, ausgenommen den Top-Pegel, eine Unterteilung jedes Pixelblocks eines nächst höheren Pegels in eine betreffende Matrix von Pixeln dieses betreffenden Pegels schafft, wobei die Bildquelle auf einer Block-nach-Block-Basis Information über die Pixel zu dem Bildempfänger überträgt, **dadurch gekennzeichnet, dass** unabhängig von einem Inhalt des Bildes die Bildquelle die Pixelwerte aller Pixel jedes betreffenden Blocks nacheinander ohne Auftritt einer Übertragung von Pixelwerten von anderen Blöcken aus dem Pegel, zu dem der betreffende Block gehört, übertragen werden.

2. Bildverarbeitungssystem nach Anspruch 1, **dadurch gekennzeichnet, dass** der Bildempfänger vorgesehen ist zum Festhalten des Bildes mit einer gröberen Auflösung als eine Auflösung der einzelnen Pixel, wobei der Bildempfänger nur ein betreffendes Ausgangspixel für jeden betreffenden Block eines vorbestimmten Pegels festhält, wobei der Bildempfänger das eine betreffende Ausgangspixel für den betreffenden Block aus den übertragenen Pixeln dieses betreffenden Blocks herleitet.

3. Bildverarbeitungssystem nach Anspruch 1, **dadurch gekennzeichnet, dass** die Bildquelle vorgesehen ist zum Übertragen der Blöcke aus jeder betreffenden Matrix in einer gleichen Sequenz entsprechend deren räumlichen Lage in der Matrix.

4. Verfahren zum Übertragen von Pixelwerten zwischen einer Bildquelle und einem Bildempfänger, wobei das Bild in Pegel von Pixelblöcken aufgeteilt wird, wobei jeder betreffende Pegel, ausgenommen den Top-Pegel, eine Unterteilung jedes Pixelblocks eines nächst höheren Pegels in eine betreffende Matrix von Pixeln dieses betreffenden Pegels schafft, wobei Information über die Pixel auf einer Block-nach-Block-Basis übertragen wird, **dadurch gekennzeichnet, dass** unabhängig von einem Inhalt des Bildes die Bildquelle die Pixelwerte aller Pixel jedes betreffenden Blocks nacheinander ohne Auftritt einer Übertragung von Pixelwerten von anderen Blöcken aus dem Pegel, zu dem der betreffende Block gehört, übertragen werden.

5. Verfahren nach Anspruch 4, **dadurch gekennzeichnet, dass** die Blöcke aus jeder betreffenden Matrix in einer gleichen Sequenz entsprechend deren räumlichen Läge in der Matrix übertragen werden.

## Revendications

1. Système de traitement d'image comprenant une source d'image et un récepteur d'image qui sont couplés l'une à l'autre pour transférer des valeurs de pixel, la source d'image groupant l'image en des niveaux de blocs de pixels, chaque niveau particulier, à l'exception d'un niveau supérieur, assurant une subdivision de chaque bloc de pixels d'un niveau supérieur suivant en une matrice respective de blocs de pixels de ce niveau particulier, la source d'image transférant de l'information relative aux pixels au récepteur d'image sur une base de bloc après bloc, **caractérisé en ce que**, indépendamment d'un contenu de l'image, la source d'image transfère consécutivement les valeurs de pixel de tous les pixels de chaque bloc particulier sans un transfert d'intervention de valeurs de pixels en provenance d'autres blocs du niveau auquel appartient le bloc particulier.

2. Système de traitement d'image selon la revendication 1, **caractérisé en ce que** le récepteur d'image est agencé de manière à maintenir l'image à une résolution plus grossière qu'une résolution de pixels individuels, le récepteur d'image retenant seulement un pixel de sortie respectif pour chaque bloc particulier d'un niveau prédéterminé, le récepteur d'image dérivant l'un pixel de sortie respectif pour le bloc particulier à partir des pixels étant transférés de ce bloc particulier.

3. Système de traitement d'image selon la revendication 1, **caractérisé en ce que** la source d'image est agencée pour transférer les blocs en provenance de chaque matrice respective dans une même séquence suivant leur position spatiale dans la matrice.

4. Procédé pour transférer des valeurs de pixel entre une source d'image et un récepteur d'image, où l'image est groupée en des niveaux de blocs de pixels, chaque niveau particulier, à l'exception d'un niveau supérieur, assurant une subdivision de chaque bloc de pixels d'un niveau supérieur suivant en une matrice respective de blocs de pixels de ce niveau particulier, de l'information relative aux pixels étant transférée sur une base de bloc après bloc, **caractérisé en ce que**, indépendamment d'un contenu de l'image, les valeurs de pixel de tous les pixels de chaque bloc particulier sont transférées consécutivement sans un transfert d'intervention de valeurs de pixels en provenance d'autres blocs du niveau auquel appartient le bloc particulier.

5. Procédé selon la revendication 4, **caractérisé en ce que** les blocs en provenance de chaque matrice respective sont transférés dans une même séquence suivant leur position spatiale dans la matrice.
